(19) **Europäisches Patentamt**

**European Patent Office**

**Office européen des brevets**

(11) **EP 1 398 649 B1**

(12) **FASCICULE DE BREVET EUROPEEN**

(45) Date de publication et mention
de la délivrance du brevet:
**22.03.2006 Bulletin 2006/12**

(51) Int Cl.:
***G01V 1/30*** (2006.01)

(21) Numéro de dépôt: **02292246.2**

(22) Date de dépôt: **12.09.2002**

(54) **Méthode de calage d'un puits de forage**

Verfahren zur Feststellung eines Bohrloches

Method for setting a wellbore

(84) Etats contractants désignés:
**GB NL**

(43) Date de publication de la demande:
**17.03.2004 Bulletin 2004/12**

(73) Titulaire: **Totalfinaelf S.A.**
**92400 Courbevoie (FR)**

(72) Inventeurs:
• **Keskes, Naamen**
**64000 Pau (FR)**
• **Mansanne, Frédéric**
**64000 Pau (FR)**

(74) Mandataire: **Hirsch & Associés**
**58, avenue Marceau**
**75008 Paris (FR)**

(56) Documents cités:
**WO-A-02/10797          US-A- 5 444 619**
**US-A- 5 812 493          US-A- 5 859 925**

• **SAWARAGI T ET AL: "Integrating multiple knowledge sources using genetic algorithm applied to hierarchically structured sensor data" MULTISENSOR FUSION AND INTEGRATION FOR INTELLIGENT SYSTEMS, 1994. IEEE INTERNATIONAL CONFERENCE ON MFI '94. LAS VEGAS, NV, USA 2-5 OCT. 1994, NEW YORK, NY, USA,IEEE, 2 octobre 1994 (1994-10-02), pages 395-402, XP010137971 ISBN: 0-7803-2072-7**

**Description**

La présente invention concerne une méthode de calage d'un puits de forage dans un bloc sismique multi-attributs, c'est-à-dire qu'elle vise à obtenir la meilleure position d'une trajectoire de forage dans le bloc sismique.

Etat de l'art

La méthode selon l'invention, s'applique sur des blocs sismiques. Un bloc sismique est formé par la juxtaposition de traces sismiques dans un volume. On appelle "coupe sismique" une tranche de bloc sismique. Une coupe sismique offre une vue de la juxtaposition des traces sismiques contenues dans le plan de coupe. Dans une image sismique, l'intensité lumineuse d'un pixel est proportionnelle à l'attribut sismique représenté.

Le calage d'un puits de forage dans un domaine sismique a déjà fait l'objet de quelques travaux.

En particulier, le brevet FR-A-2 737 909 propose une méthode pour positionner une trajectoire de forage sur une section sismique par modélisation dans un domaine somme synthétique des lieux de la trajectoire pour lesquels on a connaissance du couple (pendage, azimut) puis par migration en temps de l'image synthétique.

Cette méthode permet de placer le puits sur une coupe sismique par une méthode de calcul déterministe.

Le document WO 02/10797 décrit aussi une méthode pour optimiser une opération minière laquelle utilise un réseau de neurones.

Apport de l'invention

L'approche de la méthode selon l'invention est de nature non-déterministe. On admet que toute mesure est entachée d'erreur et on s'attache à déterminer le meilleur calage possible par un balayage de toutes les possibilités de calage pour en sélectionner la meilleure.

La méthode selon l'invention détermine la valeur du calage par la qualité de convergence en phase d'apprentissage d'un ensemble de réseaux de neurones.

La nouveauté réside dans le fait que les réseaux de neurones sont non seulement utilisés comme estimateurs universels mais aussi comme instruments de mesure.

Ainsi chaque réseau produit une mesure de "distance" de calage et le meilleur calage est déterminé par la distance minimum.

Cette opération est analogue à la sélection de la distance minimum dans un ensemble de mesures de distance prises avec un quelconque instrument de mesure, tel qu'une règle graduée.

Définition de l'invention

La présente invention a pour objet une méthode de calage, selon la revendication 1, dans un espace présentant deux dimensions spatiales et une dimension temporelle, d'un signal S mesuré en des positions U affectées d'une incertitude, sur un ensemble de N signaux mesurés en des positions déterminées, les N + 1 signaux ayant leur origine temporelle dans un même plan, ladite méthode consistant à :

- ré-échantillonner les N + 1 signaux afin de les placer tous dans une plage d'échantillonnage identique,
- filtrer le signal S afin de le placer dans une plage de fréquences identique à celle des N signaux, et caractérisée en ce qu'elle consiste en outre à :

- définir pour chaque position U associée aux mesures du signal S un même voisinage de lieux V dans l'espace spatio-temporel centré sur la position U,
- fabriquer un réseau de neurones en couches $RN^v$ pour chaque lieu V dans le voisinage de U, chaque réseau ayant un vecteur d'entrée de dimension N associé aux mesures des N signaux et une sortie scalaire associée à une mesure du signal S,
- pour chaque réseau de neurones $RN^v$, définir un ensemble d'apprentissage tel que les entrées sont la collection de tous les vecteurs de mesures des N signaux situés aux lieux V et les sorties sont la collection des valeurs du signal S aux positions U pour toutes les positions U,
- fixer un nombre d'itérations prédéterminé Nit pour tous les réseaux de neurones et lancer les phases d'apprentissage de tous les réseaux,
- pour chaque réseau de neurones $RN^v$, calculer la valeur de l'intégrale $\Sigma^v$ de la fonction donnant l'erreur commise par le réseau à chaque itération, de l'itération 1 à l'itération Nit,
- pour chaque position spatiale $V_k$ en surface du voisinage de coordonnées $(x_k, y_k, t_0)$, sélectionner dans la dimension temps le couple de lieux $(V1_k(x_k, y_k, t_1), V2_k(x_k, y_k, t_2))$ du voisinage qui correspondent aux deux plus petits minima locaux des deux intégrales $(\Sigma^{v1}_k, \Sigma^{v2}_k)$,
- pour chaque position spatiale $V_k$ en surface du voisinage, retenir parmi les deux positions $V1_k(x_k, y_k, t_1)$ et $V2_k(x_k, y_k, t_2)$ la position $V_m$, pour laquelle le signal estimé par les réseaux de neurones respectifs $RN^{V1}_k$ et $RN^{V2}_k$ présente une variance maximale,
- choisir parmi les $V_m$ la position $V_{cal}$ pour laquelle l'intégrale $\Sigma^v_m$ est minimum.

Figures

La figure 1 représente un signal électrique positionné dans un bloc sismique.

La figure 2 illustre le résultat du filtrage d'un signal électrique qui ajuste sa plage de fréquences à celle des signaux sismiques.

La figure 3 représente un schéma de principe de fonctionnement des réseaux de neurones dans la méthode selon l'invention.

La figure 4 montre quatre fonctions d'erreurs associées aux phases d'apprentissage de quatre réseaux en couches.

La figure 5 illustre le principe de sélection du meilleur décalage temporel.

La figure 6 présente un réseau de neurones dans lequel les entrées sont issues d'une fenêtre temporelle prise sur les signaux sismiques.

La figure 7 montre le résultat de l'estimation d'un enregistrement électrique réalisée par le réseau de neurones et appliquée au meilleur point de calage.

Description complète

La méthode selon l'invention est une méthode de calage d'un puits de forage dans un bloc sismique. En se référant aux figures, un mode de mise en oeuvre de cette méthode est donné ci-après.

Une acquisition sismique permet de fabriquer un bloc sismique dont le but est de représenter le volume de sous-sol parcouru par l'onde sismique. Un bloc sismique est constitué d'un ensemble de traces sismiques sommées, c'est-à-dire prétraitées pour obtenir la meilleure vision possible des réflecteurs sous-terrains. Les réflecteurs sont des interfaces entre deux milieux présentant des vitesses différentes pour l'onde sismique. Les réflecteurs représentent généralement des limites de couches géologiques.

Soit un bloc sismique B. Le bloc sismique est défini par une matrice M à trois dimensions. Deux dimensions du bloc B sont liées à deux axes spatiaux horizontaux, appelés communément (Ox, Oy). La troisième dimension du bloc B est liée à un axe temporel vertical, appelé communément Ot.

Le bloc sismique étant une image du sous-sol, chaque élément de la matrice M est associé à un point de coordonnées $(xb_i, yb_i, tb_i)$ dans le sous-sol. La composante temps $tb_i$ est liée à la profondeur $zb_i$ par une relation du type :

$$zb_i = v(tb_i) * tb_i \qquad (1)$$

où $v(tb_i)$ est une fonction qui donne la vitesse de l'onde sismique en fonction de la profondeur.

Chaque élément de la matrice M contient un vecteur d'attributs sismiques $(A_{i1}, A_{i2},... A_{in})$ au point de coordonnées $(xb_i, yb_i, tb_i)$. Par exemple, les attributs $(A_{i1}, A_{i2,...} A_{in})$ mesurent l'énergie de l'onde sismique, aussi appelée amplitude sismique.

On appelle déport la distance qui sépare le couple émetteur-récepteur associé à une trace sismique. Une mesure d'amplitude sismique est alors déterminée par la sommation des mesures d'amplitudes sismiques selon des classes de déports prédéterminées. Typiquement, on sommera les traces selon une partition en trois classes de déports : déports proches, déports lointains et déports très lointains.

Soit un puits de forage F foré dans le volume de sous-sol couvert par le bloc sismique B. Le puits F parcourt le sous-sol selon une trajectoire de forage définie par un ensemble de points de coordonnées spatiales $(Xf_l, yf_l, zf_l)$.

Tout forage de puits d'exploration pétrolière donne lieu à l'enregistrement de nombreuses mesures électriques dans la profondeur du puits. Pour chaque point de coordonnées $(xf_l, yf_l, zf_l)$ de la trajectoire du puits de forage, on acquiert ainsi un ensemble de mesures électriques $(E_1, E_2,... E_n)$.

La dimension des profondeurs $zf_i$ est l'unité de longueur ; les mesures sont prises en mètres ou en pieds. Une première opération pour placer le puits dans le bloc sismique est de transformer la grandeur longueur en grandeur temps. Cette transformation s'opère aisément grâce à la relation (1) puisque l'on peut mesurer les vitesses de propagation de l'onde sismique dans le sous-sol au voisinage du puits, ces vitesses étant directement mesurées dans le puits de forage.

Le résultat de la transformation est une trajectoire de puits temporelle définie par un ensemble de points U de coordonnées spatiales $(xf_i, yf_i, tf_i)$.

On accroche ensuite le puits dans le bloc sismique par les coordonnées de départ de sa trajectoire ou coordonnées de surface $(xf_0, yf_0, tf_0)$.

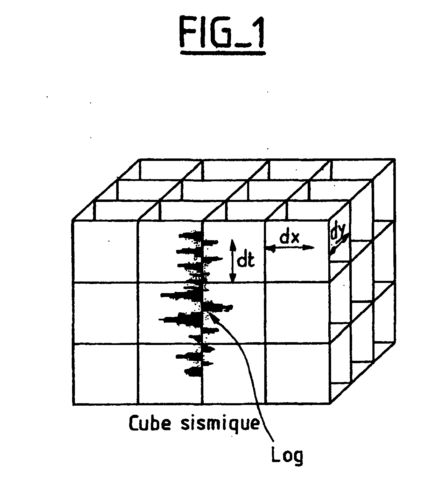

La figure 1 schématise une portion d'un bloc sismique (cube sismique) présentant des pas en espace dx et dy dans les deux dimensions horizontales et un pas en temps dt dans la dimension verticale. Un signal électrique (Log) est placé dans la portion du bloc.

Comme les enregistrements électriques dans les puits de forage sont généralement effectués tous les pieds et que la résolution d'un signal sismique, fonction de sa bande passante, est de l'ordre de quelques mètres, il convient dans un premier temps de ré-échantillonner les signaux électriques et sismiques de sorte que leur pas d'échantillonnage dans la dimension temps soient similaires. Pour ce faire, on ré-échantillonne l'ensemble des mesures électriques du puits F et on sur-échantillonne l'ensemble des mesures d'amplitude sismique du bloc B. Dans un deuxième temps, on applique un filtre sur les signaux électriques pour les amener dans une plage de fréquences identique à celle des signaux sismiques.

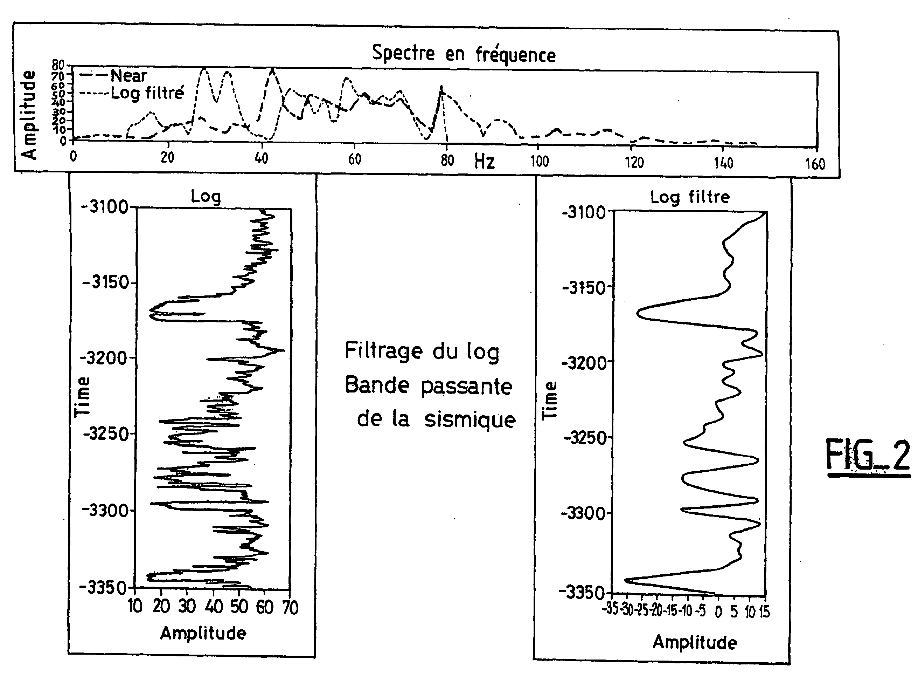

La figure 2 montre un exemple de filtrage d'une mesure électrique. Le rectangle de gauche intitulé "Log" représente l'amplitude d'un signal électrique échantillonné en temps après application de la transformation (1). Le rectangle de droite intitulé "Log Filtré" représente le signal électrique dont les fréquences ont été amenées dans le domaine des fréquences sismiques par application de filtres passe-haut et passe-bas. Le rectangle supérieur intitulé "Spectre en Fréquence", dont l'axe horizontal gradue des fréquences et l'axe vertical des amplitudes, montre les deux spectres de fréquences associés à une trace sismique (Near) et au signal électrique filtré (Log filtré). On peut noter que le signal électrique qui contenait à l'origine beaucoup plus de hautes fréquences que la trace sismique se trouve maintenant ramené dans le domaine fréquentiel du signal sismique.

On définit alors pour chaque point U constituant la trajectoire du puits et associé à une mesure électrique $E_i$ un voisinage spatio-temporel dans le bloc sismique B sous la forme d'un parallélépipède centré sur le point U. A l'instar du bloc sismique B, le parallélépipède possède deux faces spatiales horizontales et une dimension temporelle verticale, orthogonale à la face spatiale. Soit Dvx le nombre de lieux du voisinage sur l'axe Ox, Dvy le nombre de lieux du voisinage sur l'axe Oy et Dvt le nombre de lieux du voisinage sur l'axe Ot.

On choisira, par exemple, une dimension du parallélépipède de 5 échantillons de part et d'autre du point U dans chaque dimension. Dvx, Dvy et Dvt prennent, dans ce cas, tous pour valeur 11 et le voisinage est défini comme un cube contenant 1331 (11 x 11 x 11) points de mesures sismiques. Le même voisinage s'applique à tous les points de la trajectoire, c'est-à-dire par extension à la trajectoire elle-même. Le voisinage est défini par un ensemble de points V. On appelle Npv le nombre de points inclus dans le voisinage. Npv est égal au produit Dvx x Dvy x Dvt et vaut 1331 dans l'exemple précédent.

On fabrique ensuite Npv réseaux de neurones en couches. Pour un cube de 1331 points, on fabrique ainsi 1331 réseaux de neurones. Le vecteur d'entrée de chaque réseau est un vecteur de mesures d'amplitude sismique dont chaque composante appartient à une classe de déports différente. La sortie du réseau se réduit à un scalaire représentant une mesure électrique $E_i$.

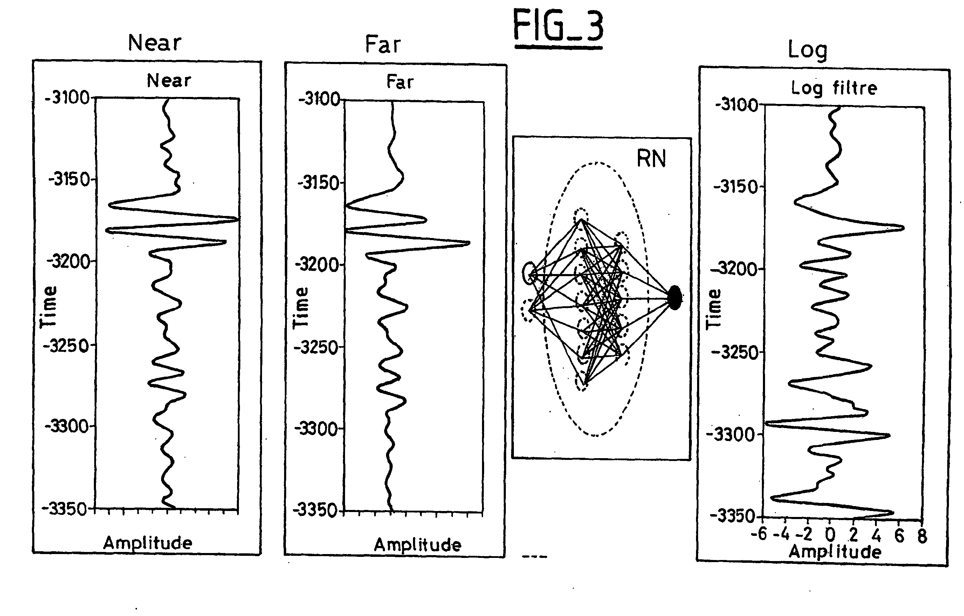

La figure 3 offre un schéma de principe. Dans cet exemple, les réseaux de neurones possèdent deux entrées et une sortie. Le rectangle de gauche intitulé "Near" montre les valeurs prises par la première entrée du réseau de neurones dans l'ensemble d'apprentissage. Le rectangle central intitulé "Far" montre les valeurs prises par la seconde entrée du réseau de neurones dans l'ensemble d'apprentissage. Le rectangle de droite intitulé "Log" montre les valeurs prises par la sortie du réseau de neurones dans l'ensemble d'apprentissage. Un exemple est donc constitué par deux valeurs d'entrée prises à un temps (Time) déterminé sur les signaux "Near" et "Far" et une valeur de sortie prise au même temps sur le signal "Log". L'ellipse intitulée "RN" est une représentation symbolique du réseau de neurones entre entrées et sortie.

Les réseaux de neurones ont alors pour but d'apprendre une relation entre la mesure électrique $E_i^u$ et les mesures sismiques $(A_1^v, A_2^v, ... A_n^v)$, c'est-à-dire une fonction f telle que :

$$E_i^u = f(A_1^v, A_2^v, ... A_n^v) \qquad (2)$$

Une mesure indicée par u indique que sa valeur est prise sur la trajectoire du puits et une mesure indicée par v indique que sa valeur est prise dans le voisinage.

Les réseaux de neurones présentent tous la même architecture, c'est-à-dire le même nombre de couches cachées, le même nombre de neurones par couche, le même nombre de connections et les mêmes conditions initiales.

On choisit une position V dans le voisinage. La mise en oeuvre du réseau de neurones $RN^v$ associé à la position V s'effectue de la façon suivante. Pour tous les points U de la trajectoire du puits, on fabrique un ensemble d'apprentissage pour le réseau $RN^v$ en collectant tous les vecteurs de mesures d'amplitude sismique situés à la position V. L'ensemble d'apprentissage pour le réseau de neurones $RN^v$ est ainsi constitué d'autant d'exemples qu'il y a de points U sur la trajectoire.

On choisit un nombre d'itérations prédéterminé Nit et on lance la phase d'apprentissage du réseau de neurones $RN^v$ par rétro-propagation du gradient.

Lorsque les Nit itérations sont effectuées, on calcule la valeur de l'intégrale $\Sigma^v$ de la fonction donnant l'erreur quadratique commise par le réseau à chaque itération, de l'itération 1 à l'itération Nit.

On choisit ensuite une nouvelle position V' dans le voisinage de la trajectoire et on accomplit les étapes précédentes avec le réseau de neurones $RN^{v'}$ associé à la position V' pour obtenir une nouvelle intégrale $\Sigma^{v'}$.

On renouvelle ainsi l'opération jusqu'à ce que tous les points du voisinage aient été balayés. Pour un cube de 1331 points, on obtient ainsi 1331 valeurs d'intégrale.

En machine, ces opérations peuvent se réaliser de façon séquentielle avec le même réseau de neurones réinitialisé à chaque changement de point dans le voisinage. Cependant, il est recommandé de mettre en oeuvre cette technique en parallèle dans des machines à multi-processeurs organisés en fermes de calcul en fabriquant autant de réseaux de neurones que la capacité des configurations-machines le permet. L'idéal serait de pouvoir obtenir autant de réseaux de neurones que de points dans le voisinage.

Tous les points du voisinage ayant été parcourus, pour chaque position spatiale $V_k$ en surface du voisinage de coordonnées $(x_k, y_k, t_0)$ au nombre de Dvx x Dvy, on retient dans la dimension temps le couple de lieux $(V1_k(x_k, y_k, t_1), V2_k(x_k, y_k, t_2))$ du voisinage qui correspondent aux deux plus petits minima locaux des deux intégrales $(\Sigma v1_k, \Sigma v2_k)$.

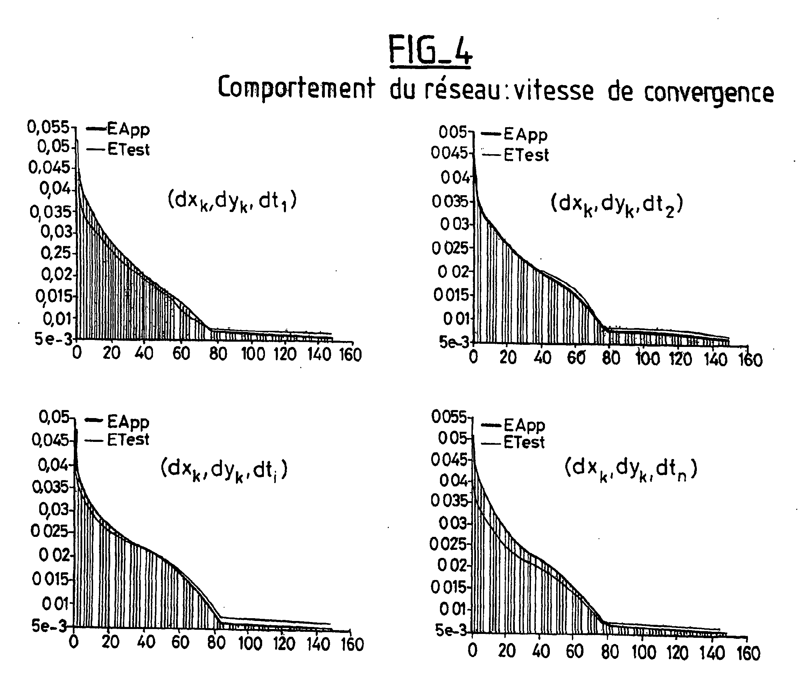

La figure 4 montre quatre fonctions d'erreurs associées aux phases d'apprentissage de quatre réseaux de neurones identiques. Les axes horizontaux sont gradués en itérations et les axes verticaux donnent les erreurs quadratiques commises par les réseaux lors de leur estimation du signal électrique. Les valeurs des quatre intégrales associées aux réseaux sont égales aux surfaces hachurées. Dans cet exemple, ce sont les réseaux identifiés par les triplets $(dx_k, dy_k, dt_1)$ et $(dx_k, dy_k, dt_2)$ qui présentent les deux plus petits minima locaux des intégrales.

On calcule ensuite la variance du signal estimé par les réseaux de neurones $RN^{V1}_k$ et $RN^{V2}_k$ et on retient dans le couple $(V1_k(x_k,y_k,t_1),V2_k(x_k,y_k,t_2))$ la position $V_m$ pour laquelle la variance est maximale. On définit ainsi un ensemble composé de Dvx x Dvy lieux $V_m$ dans le voisinage.

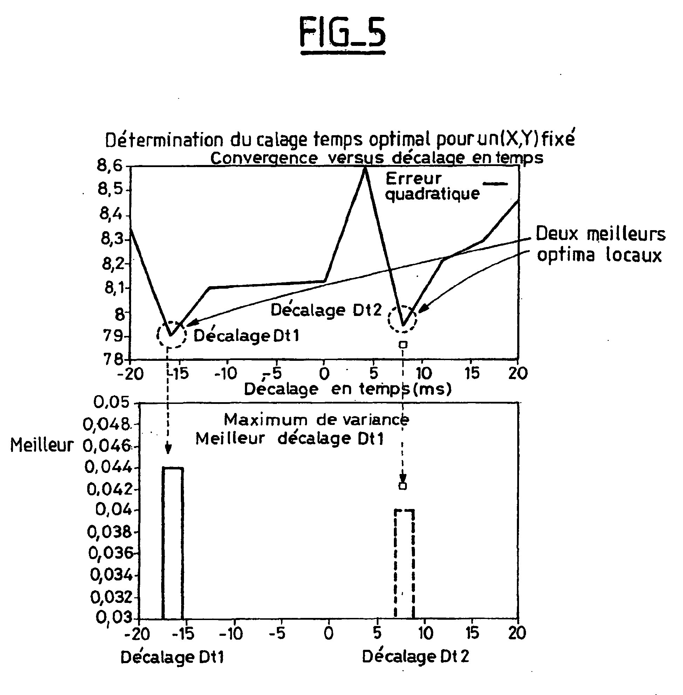

La figure 5 indique comment se fait la sélection de la position $V_m$ à partir des positions $V_k$. Le rectangle supérieur donne les valeurs d'intégrales en fonction du déplacement sur l'axe temporel pour un $V_k$ choisi. Dans cet exemple, le voisinage temporel est fixé à 20 échantillons temporels de part et d'autre d'un point de la trajectoire. Les décalages DE1, et DE2 correspondent aux deux plus petits minima locaux des intégrales. Le rectangle inférieur représente les valeurs des variances des deux signaux estimés par les réseaux de neurones associés aux décalages DE1 et DE2. On retient le décalage DE1 comme meilleur calage $V_m$ pour la position de surface $V_k$.

Enfin, on choisit parmi tous les Dvx x Dvy lieux $V_m$, la position $V_{cal}$ pour laquelle $\Sigma^v_m$ est minimum. La position $V_{cal}$ est la position du voisinage qui assure le meilleur calage du signal électrique sur les signaux sismiques.

Un autre mode de réalisation consiste à ne pas renseigner les réseaux de neurones par une mesure unique par classe de déports mais par un ensemble de M valeurs prises dans une fenêtre d'échantillonnage en temps sur la trace, laquelle fenêtre est centrée sur un point V du voisinage. On prendra, par exemple, une fenêtre temporelle égale à 8 échantillons de part et d'autre du point V, c'est-à-dire 17 valeurs de temps.

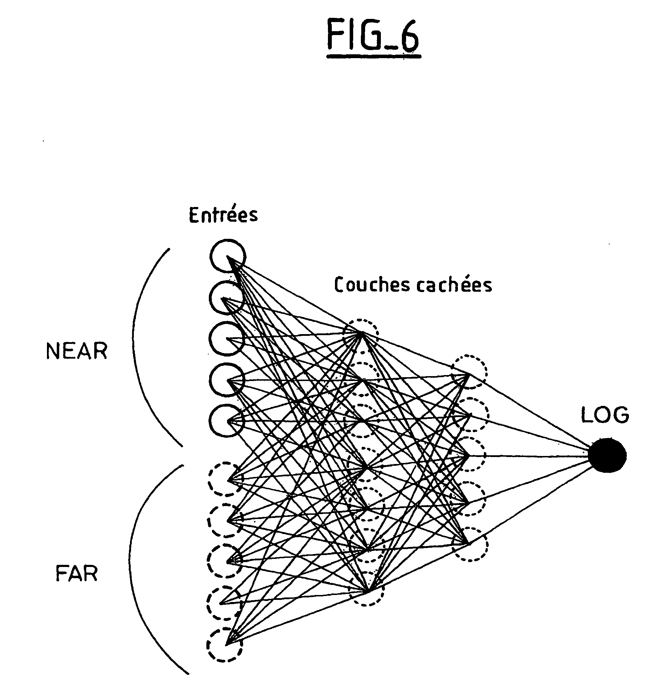

La figure 6 présente un tel réseau pour lequel la fenêtre temporelle choisie est de 2 échantillons de part et d'autre du point V pour des raisons de simplicité. Le réseau possède de ce fait 5 entrées par classe de déports. La figure montre deux classes de déports proche (Near) et lointain (Far) qui génèrent 2 x 5 entrées.

Ceci modifie l'architecture du réseau qui comporte alors un vecteur d'entrée dont la dimension passe de N à N x M. La sortie du réseau demeure scalaire.

La méthode selon l'invention s'applique ensuite de façon identique et conduit à la sélection du meilleur point du voisinage comme meilleur calage possible.

Cette technique de fenêtrage a l'avantage de permettre au réseau d'effectuer une déconvolution sur la base de la durée de l'impulsion sismique émise dans le sous-sol. La qualité des résultats s'en trouve alors grandement améliorée.

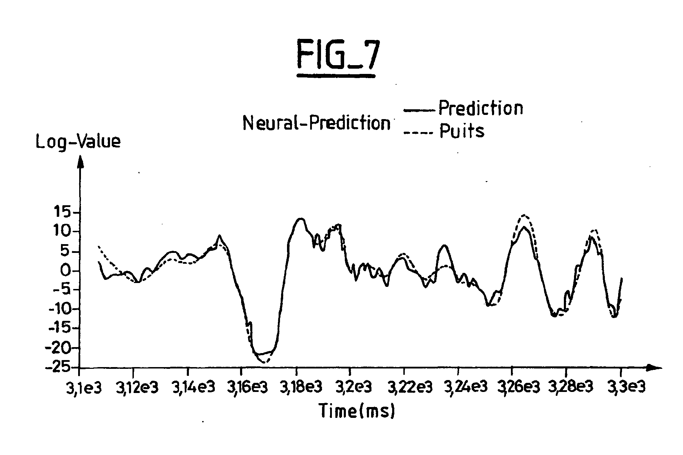

La figure 7 montre le résultat de l'estimation de l'enregistrement électrique (Prédiction) réalisée par le réseau de neurones à partir des signaux sismiques et appliquée au meilleur point de calage. Le tracé en pointillé (Puits) représente le signal électrique effectivement mesuré. On notera la très grande qualité de l'estimation qui atteste de la qualité du calage déterminé par la méthode selon l'invention.

**Revendications**

1. Méthode de calage, dans un espace présentant deux dimensions spatiales et une dimension temporelle, d'un signal S mesuré en des positions U affectées d'une incertitude, sur un ensemble de N signaux mesurés en des positions déterminées, les N + 1 signaux ayant leur origine temporelle dans un même plan, ladite méthode consistant à :

- ré-échantillonner les N + 1 signaux afin de les placer tous dans une plage d'échantillonnage identique,
- filtrer le signal S afin de le placer dans une plage de fréquences identique à celle des N signaux,
et **caractérisée en ce qu'**elle consiste en outre à :
- définir pour chaque position U associée aux mesures du signal S un même voisinage de lieux V dans l'espace spatio-temporel centré sur la position U,
- fabriquer un réseau de neurones en couches $RN^v$ pour chaque lieu V dans le voisinage de U, chaque réseau ayant un vecteur d'entrée de dimension N associé aux mesures des N signaux et une sortie scalaire associée à une mesure du signal S,
- pour chaque réseau de neurones $RN^v$, définir un ensemble d'apprentissage tel que les entrées sont la collection de tous les vecteurs de mesures des N signaux situés aux lieux V et les sorties sont la collection des valeurs du signal S aux positions U pour toutes les positions U,
- fixer un nombre d'itérations prédéterminé Nit pour tous les réseaux de neurones et lancer les phases d'apprentissage de tous les réseaux,
- pour chaque réseau de neurones $RN^v$, calculer la valeur de l'intégrale $\Sigma^v$ de la fonction donnant l'erreur commise par le réseau à chaque itération, de l'itération 1 à l'itération Nit,
- pour chaque position spatiale $V_k$ en surface du voisinage de coordonnées $(x_k,y_k,t_0)$, sélectionner dans la dimension temps le couple de lieux $(V1_k(x_k,y_k,t_1),\ V2_k(x_k,y_k,t_2))$ du voisinage qui correspondent aux deux plus petits minima locaux des deux intégrales $(\Sigma^{v1}_k, \Sigma^{v2}_k)$,
- pour chaque position spatiale $V_k$ en surface du voisinage, retenir parmi les deux positions $V1_k(X_k,Y_k,t_1)$ et $V2_k(x_k,y_k,t_2)$ la position $V_m$, pour la-

quelle le signal estimé par les réseaux de neurones respectifs $RN^{V1}_k$ et $RN^{V2}_k$ présente une variance maximale,

- choisir parmi les $V_m$ la position $V_{cal}$ pour laquelle l'intégrale $\Sigma^v_m$ est minimum.

2. Méthode selon la revendication 1, **caractérisée en ce que** la mise en oeuvre des réseaux de neurones consiste à :

- définir pour chaque position U associée aux mesures du signal S un même voisinage de lieux V dans l'espace spatio-temporel centré sur la position U,

- fabriquer un réseau de neurones en couches pour chaque lieu V dans le voisinage de U, chaque réseau ayant un vecteur d'entrée de dimension N x M associé aux mesures sur une fenêtre temporelle de taille M centrée en V des N signaux et une sortie scalaire associée à une valeur du signal S,

- pour chaque réseau de neurones, définir un ensemble d'apprentissage tel que les entrées sont la collection de tous les vecteurs de mesures prises dans une fenêtre temporelle de taille M centrée en V pour les N signaux et les sorties sont la collection des valeurs du signal S aux positions U pour toutes les positions U,

- fixer un nombre d'itérations prédéterminé Nit pour tous les réseaux de neurones et lancer les phases d'apprentissage de tous les réseaux,

- pour chaque réseau de neurones $RN^v$, calculer la valeur de l'intégrale $\Sigma^v$ de la fonction donnant l'erreur commise par le réseau à chaque itération, de l'itération 1 à l'itération Nit,

- pour chaque position spatiale $V_k$ en surface du voisinage de coordonnées $(x_k, y_k, t_0)$, sélectionner dans la dimension temps le couple de lieux $(V1_k(x_k, y_k, t_1), V2_k(x_k, y_k, t_2))$ du voisinage qui correspondent aux deux plus petits minima locaux des deux intégrales $(\Sigma^{v1}_k, \Sigma^{v2}_k)$,

- pour chaque position spatiale $V_k$ en surface du voisinage, retenir parmi les deux positions $V1_k(x_k, y_k, t_1)$ et $V2_k(x_k, y_k, t_2)$ la position $V_m$, pour laquelle le signal estimé par les réseaux de neurones respectifs $RN^{V1}_k$ et $RN^{V2}_k$ présente une variance maximale,

- choisir parmi les $V_m$ la position $V_{cal}$ pour laquelle l'intégrale $\Sigma^v_m$ est minimum.

**Patentansprüche**

1. Abgleichverfahren zum Abgleichen eines an durch eine Unsicherheit beeinflußten Positionen U gemessenen Signals S in einem zwei räumliche und eine zeitliche Dimension aufweisenden Raum mit einer Menge von N Signalen, die an bestimmten Positionen gemessen wurden, wobei N+1 Signale ihren zeitlichen Ursprung in derselben Ebene haben, umfassend folgende Schritte:

- Neu-Abtasten der N+1 Signale, um diese sämtlich in einen identischen Abtastbereich zu bringen,

- Filtern des Signals S, um es in einen Frequenzbereich zu bringen, welcher identisch mit demjenigen der N Signale ist,

**dadurch gekennzeichnet, daß** das Verfahren außerdem beinhaltet:

- für jede Position U in Verbindung mit den Messungen des Signals S wird eine gleiche Nachbarschaft von Orten V in dem bezüglich der Position U zentrierten räumlich-zeitlichen Bereich definiert,

- es wird ein neuronales Netzwerk mit $RN^v$ Ebenen für jeden Ort V in der Nachbarschaft von U erstellt, wobei jedes Netzwerk einen Eingangsvektor mit der Dimension N in Verbindung mit den N Signalen und einen skalaren Ausgang in Verbindung mit einer Messung des Signals S besitzt,

- für jedes neuronale Netzwerk $RN^v$ wird eine Lernmenge in der Weise definiert, daß die Eingänge die Ansammlung sämtlicher Vektoren von Messungen für die an den Stellen V befindlichen N Signale sind und die Ausgänge die Ansammlung der Werte des Signals S an den Positionen U für sämtliche Positionen U sind,

es wird eine vorbestimmte Anzahl Nit von Iterationen für sämtliche neuronalen Netzwerke festgelegt, und es werden die Lernphasen für sämtliche Netzwerke eingeleitet,

- für jedes neuronale Netzwerk $RN^v$ wird der Integralwert $\Sigma^v$ der Funktion berechnet, die den von dem Netzwerk bei jeder Iteration gemachten Fehler wiedergibt, und zwar von der ersten Iteration bis zu der Iteration Nit,

- für jede räumliche Position $V_k$ der Nachbarschaft mit den Koordinaten $(x_k, y_k, t_0)$ wird in der zeitlichen Dimension das Paar von Orten $(V1_k(x_k, y_k, t_1), V2_k(x_k, y_k, t_2))$ der Nachbarschaft ausgewählt, die den beiden kleinsten örtlichen Minima der beiden Integrale $(\Sigma^{V1}_k, \Sigma^{V2}_k)$ entsprechen,

- für jede räumliche Position Vk in der Nachbarebene wird unter den zwei Positionen $V1_k(x_k, y_k, t_1)$ und $V2_k(x_k, y_k, t_2)$ diejenige Position $V_m$ beibehalten, für die das von den neuronalen Netzwerken $RN^{V1}_k$ bzw. $RN^{v2}_k$ abgeschätzte Signal eine maximale Varianz aufweist,

- unter den Werten $V_m$ wird diejenige Position $V_{cal}$ gewählt, für die das Integral $\Sigma^v_m$ am kleinsten ist.

**2.** Verfahren nach Anspruch 1, **dadurch gekennzeichnet, daß** das Erstellen der neuronalen Netzwerke beinhaltet:

- für jede zu Messungen des Signals S gehörige Position U wird eine gleiche Nachbarschaft von Orten V im räumlich-zeitlichen Bereich, der bezüglich der Position U zentriert ist, definiert,
- es wird ein geschichtetes neuronales Netzwerk für jeden Ort V in der Nachbarschaft von U erstellt, wobei jedes Netzwerk einen Eingangsvektor mit der Dimension N x M in Verbindung mit Messungen eines zeitlichen Fensters der Größe M und zentriert bezüglich V der N Signale sowie einen skalaren Ausgang in Verbindung mit einem Wert des Signals S aufweist,
- für jedes neuronale Netzwerk wird eine Lernmenge in der Weise definiert, daß die Eingänge eine Ansammlung sämtlicher Vektoren von Messungen in einem Zeitfenster der Größe M, zentriert bezüglich V, für die N Signale und die Ausgänge die Ansammlung der Werte des Signals S an den Positionen U für sämtliche Positionen U bilden,
- es wird eine vorbestimmte Anzahl Nit von Iterationen für sämtliche neuronalen Netzwerke festgelegt, und es werden die Lernphasen für sämtliche Netzwerke eingeleitet,
- für jedes neuronale Netzwerk $R^{NV}$ wird der Wert des Integrals $\Sigma^v$ der Funktion berechnet, die den Fehler angibt, der von dem Netzwerk bei jeder Iteration verursacht wird, und zwar von der ersten bis zur Iteration Nit,
- für jede räumliche Position $V_k$ der Nachbarschaft mit den Koordinaten $(x_k, y_k, t_0)$ wird in der zeitlichen Dimension das Paar von Orten $(V1_k(x_k, y_k, t_1), V2_k(x_k\ y_k, t_2))$ der Nachbarschaft ausgewählt, die den beiden kleinsten örtlichen Minima der beiden Integrale $(\Sigma^{V1}_k, \Sigma^{V2}_k)$ entsprechen,
- für jede räumliche Position Vk in der Nachbarebene wird unter den zwei Positionen $V1_k(x_k, y_k, t_1)$ und $V2_k(x_k, y_k, t_2)$ diejenige Position $V_m$ beibehalten, für die das von den neuronalen Netzwerken $RN^{V1}_k$ bzw. $RN^{V2}_k$ abgeschätzte Signal eine maximale Varianz aufweist,
- unter den Werten $V_m$ wird diejenige Position $V_{cal}$ gewählt, für die das Integral $\Sigma^v_m$ am kleinsten ist.

**Claims**

**1.** Method of fitting, in a space presenting two spatial dimensions and one temporal dimension, a signal S measured in positions U subject to an uncertainty, to a set of N signals measured in determined positions, the N +1 signals having their temporal origin in a same plane, the said method involving:

- re-sampling the N + 1 signals in order to place them all in an identical sampling range,
- filtering the signal S in order to place it in a range of frequencies that is identical to that of the N signals,

and **characterized in that** it also involves:

- defining for each position U associated with the measurements of the signal S a same neighbourhood of points V in the spatio-temporal space centred on the position U,
- producing a layered neural network $RN^v$ for each point V in the neighbourhood of U, each network having an entry vector of dimension N associated with the measurements of the N signals and a scalar exit associated with a measurement of the signal S,
- for each neural network $RN^v$, defining a training set such that the entries are the collection of all the vectors of measurements of the N signals situated at the points V and the exits are the collection of the values of the signal S at the positions U for all the positions U,
- fixing a predetermined number of iterations Nit for all the neural networks and launching the training phases of all the networks,
- for each neural network $RN^v$, calculating the value of the integral $\Sigma^v$ of the function giving the error committed by the network at each iteration, from iteration 1 to iteration Nit,
- for each surface spatial position $V_k$ of the neighbourhood with coordinates $(x_k, y_k, t_0)$, selecting in the time dimension the pair of points $V1_k(x_k, y_k, t_1)$, $V2_k(x_k, y_k, t_2)$, of the neighbourhood which correspond to the two smallest local minima of the two integrals $(\Sigma^{v1}_k, \Sigma^{v2}_k)$,
- for each surface spatial position $V_k$ of the neighbourhood, retaining from among the two positions $V1_k(x_k, y_k, t_1)$, $V2_k(x_k, y_k, t_2)$ the position $V_m$, for which the signal estimated by the respective neural networks $RN^{V1}_k$ and $RN^{V2}_k$ presents a maximum variance,
- choosing from among the positions $V_m$ the position $V_{cal}$ for which the integral $\Sigma^v_m$ is minimum.

**2.** Method according to claim 1, **characterized in that** the use of the neural networks comprises:

- defining for each position U associated with the measurements of the signal S a same neighbourhood of points V in the spatio-temporal space centred on the position U,
- producing a layered neural network $RN^v$ for each point V in the neighbourhood of U, each network having an entry vector of dimension N x M associated with the measurements on a time window of size M centred on V of the N signals and a scalar exit associated with a value of the signal S,

- for each neural network, defining a training set such that the entries are the collection of all the vectors of measurements taken in a time window of size M centred on V for the N signals and the exits are the collection of the values of the signal S at the positions U for all the positions U,

- fixing a predetermined number of iterations Nit for all the neural networks and launching the training phases of all the networks,

- for each neural network $RN^v$, calculating the value of the integral $\Sigma^v$ of the function giving the error committed by the network at each iteration, from iteration 1 to iteration Nit,

- for each surface spatial position $V_k$ of the neighbourhood with coordinates $(x_k, y_k, t_0)$, selecting in the time dimension the pair of points $V1_k(x_k, y_k, t_1)$, $V2_k(x_k, y_k, t_2)$, of the neighbourhood which correspond to the two smallest local minima of the two integrals $(\Sigma^{V1}_k, \Sigma^{V2}k)$,

- for each surface spatial position $V_k$ of the neighbourhood, retaining from among the two positions $V1_k(x_k, y_k, t_1)$, $V2_k(x_k, y_k, t_2)$ the position $V_m$, for which the signal estimated by the respective neural networks $RN^{V1}_k$ and $RN^{V2}_k$ presents a maximum variance,

- choosing from among the $V_m$ positions the position $V_{cal}$ for which the integral $\Sigma^v_m$ is minimum.

# FIG_1

Cube sismique

Log

Spectre en fréquence

Filtrage du log
Bande passante
de la sismique

FIG_2

EP 1 398 649 B1

# FIG_3

Near

Far

Log

EP 1 398 649 B1

# FIG_4

## Comportement du réseau : vitesse de convergence

$(dx_k, dy_k, dt_1)$

$(dx_k, dy_k, dt_2)$

$(dx_k, dy_k, dt_i)$

$(dx_k, dy_k, dt_n)$

EP 1 398 649 B1

# FIG_5

Détermination du calage temps optimal pour un(X,Y) fixé
Convergence versus décalage en temps

# FIG_6

Entrées

Couches cachées

NEAR

FAR

LOG

# FIG_7

Neural-Prediction ——Prediction
---- Puits

Log-Value

Time(ms)